Europäisches Patentamt

(19) European Patent Office

Office européen des brevets

(11) Publication number: **0 431 863 A2**

# (12) EUROPEAN PATENT APPLICATION

(21) Application number: **90313090.4**

(22) Date of filing: **03.12.90**

(51) Int. Cl.⁵: **A01N 59/02, A01N 25/22**

(30) Priority: **04.12.89 US 445029**

(43) Date of publication of application:
**12.06.91 Bulletin 91/24**

(84) Designated Contracting States:
**AT BE CH DE DK ES FR GB GR IT LI LU NL SE**

(71) Applicant: **Goos, Robert Jay**
**1710 South 6th Street**
**Fargo, North Dakota 58103 (US)**
Applicant: **Ahrens, William H.**
**2017 9 1/2 Street North**
**Fargo, North Dakota 58102 (US)**

(72) Inventor: **Goos, Robert Jay**
**1710 South 6th Street**
**Fargo, North Dakota 58103 (US)**
Inventor: **Ahrens, William H.**
**2017 9 1/2 Street North**
**Fargo, North Dakota 58102 (US)**

(74) Representative: **Bannerman, David Gardner et al**
**Withers & Rogers 4 Dyer's Buildings Holborn**
**London, EC1N 2JT (GB)**

(54) **Ammonium thiosulfate as herbicide extender.**

(57) Ammonium thiosulfate is used as an efficacy extender for a wide variety of herbicides.

EP 0 431 863 A2

# AMMONIUM THIOSULFATE AS HERBICIDE EXTENDER

## BACKGROUND OF THE INVENTION

1. Field of the Invention

The invention relates to the use of ammonium thiosulfate to extend the effective life of herbicides in the soil.

2. Description of Related Technology

The use of soil-applied herbicides necessarily requires a balancing of competing interests. Herbicides with a long soil life are desirable for full-season weed control, but herbicides with a short soil life pose less of a threat for groundwater contamination and allow the farmer more freedom in selecting crop rotations. A herbicide with a soil life that is too short may not control weeds effectively or to the desired degree.

One example of a herbicide adversely affected by its short lived nature is S-ethyl dipropylthiocarbamate (EPTC) which is found in the commercial products Eptam™ and Eradicane™. It has good weed control properties and a short life in the soil. Unfortunately, its continued use leads to microbe populations that become very efficient at breaking down the herbicide into nonphytotoxic metabolites. The effective life of the herbicide continues to decline at an accelerating rate as this microbial population grows. Thus, the use of EPTC has been abandoned by many farmers after witnessing an unacceptable decline in weed control. A similar pattern of reducing effectiveness occurs with certain other herbicides as well.

It would be desirable to have an agent that would extend the soil life of herbicides. Such an agent would be particularly desirable if it could be used to counteract the problem of accelerated degradation mentioned above or if it could be used to extend the life of a short-lived herbicide such that the weed control properties would be improved. Such an agent would provide the farmer with more confidence in selecting short-lived herbicides.

Recently, a few extenders have been developed for soil-applied herbicides. For example, see U.S. Patent Nos. 4,762,458 ; 4,652,302 ; 4,629,499 ; 4,623,358 ; 4,490,166 ; 4,478,636 ; and 4,433,979. None of the extenders described in these patents includes ammonium thiosulfate.

Ammonium thiosulfate (ATS) is used in a variety of agricultural operations including corrosion inhibitors for fertilizer mixtures (CA 95 : 79222 s), defoliants and desiccants (3,457,062 ; 3,689,246 ; and 3,730,703), selective herbicides (3,515,535), maturation accelerators (4,300,941), and fertilizers. Ammonium thiosulfate also is known to slow the transformations of certain fertilizers in the soil (e.g., the conversion of urea into ammonium and the conversion of ammonium into nitrate). Ammonium thiosulfate has long been used in relatively pure forms as a reducing agent for the photographic industry. None of these uses, however, suggests that ATS could be useful as a herbicide extender.

## SUMMARY OF THE INVENTION

It has been discovered that ammonium thiosulfate is useful as an extender for herbicides. In accordance with this discovery, the invention encompasses a process for extending the useful plant control life of a herbicide in contact with soil by applying to the soil a herbicide and an amount of ammonium thiosulfate that is effective to extend the useful life, i.e. prolong the plant control efficacy, of the herbicide.

In another aspect, the invention relates to a herbicidal composition having an extended useful soil life, said composition comprising :

a herbicide ; and

an amount of ammonium thiosulfate that is effective to extend the useful soil life of said herbicide.

## DETAILED DESCRIPTION

The ammonium thiosulfate (ATS) extending agent according to the invention is applied to soil in combination with a herbicide and may or may not be incorporated into the soil depending on the herbicide requirements. The herbicide and ATS may be applied to the soil in the Fall or Spring and before or after planting. Care should be exercised, however, to avoid foliage burn if used with a postemergent herbicide.

The herbicide and ATS may be applied simultaneously or sequentially. Preferably, ATS is applied with the herbicide as a tank mixed solution either in the Spring or the Fall at an effective level for extending the useful life of the herbicide.

Ammonium thiosulfate can be manufactured as a solid, but, because of its hygroscopic nature, it is almost universally manufactured as an aqueous solution. Agricultural-grade ATS solutions usually contain 50-60% (wt/vol) ammonium thiosulfate. Photographic grade ATS is a 60% solution with fewer impurities. Both agricultural-grade and photographic-grade ATS solutions can be used for the present invention.

Although the precise application rate depends on the herbicide, the ATS application rate for effective herbicide extension is generally up to about 40, preferably within a range from about 10 to about 37.5 mL of a 60% ATS solution per 100 kg soil. The effective ATS rates for field application will vary depending on the incorporation depth. For herbicides that are not incorporated at all or are incorporated in only the top inch of soil, the effective rate of agricultural-grade ATS solution corresponds to approximately 2-10 gallons per acre. The upper and lower limits of this range may be higher or lower depending on the depth of incorporation and on the specific herbicide.

Herbicides that are extended in the soil with ATS include thiocarbamates (e.g. EPTC, triallate, and butylate), phenoxy herbicides (e.g. 2,4-D), chloroacetamides (e.g. alachlor and metolachlor), cinmethylin, and mixtures thereof.

While not wishing to be bound by theory, ATS may act as a reducing agent in the soil to free iron and manganese. The released iron and manganese, in turn, inhibit enzymatic activity by soil microbes responsible for breaking down herbicidal compounds. Accordingly, the effective life of the herbicide in the soil is extended.

## Example 1

The first experiment was conducted by incubating a sample of moist Embden sandy loam soil at 15°C with various levels of EPTC with and without ATS. The application rate of ATS was 37.5 mL of 60% solution/100 kg of soil, which corresponds to an application rate of 10.2 gallons per acre (assuming a one inch depth of incorporation).

After incubating the sample for 3 or 6 weeks, the soil was analyzed for herbicidal activity by bioassay. Foxtail millet was the test "weed". Emergence counts were used to estimate the percent control of the test weed.

A typical portion of the results of EPTC experiment 1 are shown in Table 1. After three weeks of incubation, the high control numbers indicate EPTC was strongly effecting weed control with few indications that ATS was extending the EPTC. At six weeks, however, the EPTC control was beginning to decline. The extending effects of ATS began to appear. The control verified there was no influence on the growth of the millet by ATS in the absence of EPTC. Thus, ATS extended the soil life of the EPTC, and the difference was not due to any intrinsic herbicidal activity of the ATS at the rate applied.

Table 1.  Effect of EPTC and ATS on control of foxtail millet.
-Fixed ATS Level, Varied EPTC Levels

| EPTC (ppm) | ATS Presence | Percent control Three weeks | Six weeks | Six Week Comments |
|---|---|---|---|---|
| | | ---------------%--------------- | | |
| 0 (Control) | No | 5 | 1 | |
| | Yes | 0 | 3 | 2% Effect |
| 5 | No | 91 | 48 | |
| | Yes | 89 | 95 | 47% Effect |
| 10 | No | 94 | 74 | |
| | Yes | 95 | 95 | 21% Effect |
| 20 | No | 96 | 92 | |
| | Yes | 96 | 97 | 5% Effect |

## Example 2

This experiment was conducted in a similar manner as Example 1, except that weed growth (instead of emergence count) was the indicator of herbicidal activity. There was one application rate of EPTC (5 ppm), and 5 application rates of agricultural grade ATS (5, 10, 15, 20, and 25 mL/100 kg). An additional treatment using Eradicane Extra® EPTC with unidentified efficacy, an extender was used as a comparison. Incubation lengths of the loam before bioassay varied from 3-9 weeks.

The results of this example are listed in Table 2 on a relative basis for convenient comparison. Low growth numbers indicate better control.

After three weeks of incubation, all application rates of ATS with EPTC reduced the growth of foxtail millet over the use of EPTC alone. In this experiment, the 15 mL/100 kg rate was the lowest rate of ATS that maintained efficacy. The highest rate of ATS tested in this example (25 mL/100 kg) extended the control, i.e., kept the growth low, of EPTC well beyond 9 weeks.

Two experiments at 10 and 25 mL/100 kg gave abnormal results compared to the remaining tests. Normal experimental error is the most likely explanation for their presence.

Table 2. Effect of ATS rate and EPTC on foxtail millet growth. -Variable ATS, Fixed EPTC

| EPTC rate (ppm) | ATS rate (mL/100 kg) | Length of incubation (weeks) | | | | | |
|---|---|---|---|---|---|---|---|
| | | 3 | 4 | 5 | 6 | 7 | 9 |
| | | Growth | | | | | |
| 0 | 0 | 100 | 100 | 100 | 100 | 100 | 100 |
| 0 | 25 | 74 | 125 | 102 | 93 | - | - |
| 5 | 0 | 76 | 85 | 92 | 74 | 99 | 99 |
| 5 | 5 | 66 | 94 | 99 | 88 | - | - |
| 5 | 10 | 53 | 104 | 88 | 73 | - | - |
| 5 | 15 | 41 | 75 | 72 | 65 | - | - |
| 5 | 20 | 36 | 40 | 55 | 64 | - | - |
| 5 | 25 | 36 | 42 | 27 | 43 | 50 | 35 |
| 5* | 0 | 12 | 8 | 8 | 17 | 27 | 20 |

\* Eradicane Extra®
- data not taken

## Example 3

A test was conducted to determine whether ATS would slow the decay of 2,4-D in the soil. Tame mustard was used as the test crop because of its extreme sensitivity to 2,4-D, and like Example 2, growth was used as the indicator of control. Low growth corresponds to good control. A relatively low application rate of 2,4-D (equivalent to about 1 lb/acre) was used. Table 3 illustrates that ATS gave a pronounced extension of 2,4-D life in the soil.

Table 3. Effect of 2,4-D and ATS on growth of mustard

| 2.4-D | ATS+ | Relative growth of tame mustard++ | | | |
| | | 1 week | 2 week | 4 weeks | 6 weeks |
| | | ------------ Growth ------------- | | | |
| No | No | 100 | 100 | 100 | 100 |
| No | Yes | 129 | 96 | 94 | 101 |
| Yes | No | 38 | 30 | 126 | 126 |
| Yes | Yes | 2 | 1 | 3 | 21 |

+ ATS rate=0.30 mL/kg of agricultural grade ATS
++ Above-ground yield of mustard plants divided by that in the
control treatment times 100

Example 4

Triallate (Far-go®) is not known for its short life in the soil, but ATS was effective in prolonging the efficacy time for this popular herbicide as well (Table 4). Triallate was applied at a rate equivalent to 1 lb/acre, agricultural grade ATS was applied at 30 mL/100 kg of soil.

Table 4. Effect of Far-go® herbicide on oat growth, 16 weeks
of incubation.

| Triallate | ATS | Relative oat growth |
| | | % |
| No | No | 100 |
| No | Yes | 98 |
| Yes | No | 68 |
| Yes | Yes | 32 |

It is to be understood that the examples were presented to illustrate the invention. The examples are not intended to limit the scope of the appended claims.

**Claims**

1. A process for extending the effective plant control life of a herbicide in contact with soil, said process comprising :
   applying to the soil a herbicide and an amount of ammonium thiosulfate that is effective in extending the useful life of said herbicide as a plant growth controlling agent.

2. A process according to claim 1 wherein the applying step comprises applying said ammonium thiosulfate in admixture with a herbicide.

3. A process according to claim 2 wherein the applying step comprises applying said ammonium thiosulfate at a rate equivalent to 10 to 37.5 mL of a 60% solution per 100 kg soil.

4. A process according to claim 2 wherein said herbicide comprises a thiocarbamate, a chloroacetamide, a phenoxy, or cinmethylin.

5. A process accord to claim 4 wherein said herbicide comprises S-ethyl dipropylthiocarbamate or 2,4-D.

6. A herbicidal composition having an extended effective lifetime in the soil, said composition comprising :
a herbicide ; and
an amount of ammonium thiosulfate that is effective in extending the life of said herbicide in the soil.